# EUROPÄISCHE PATENTANMELDUNG

(11) **EP 0 726 058 A2**
(43) Veröffentlichungstag der Anmeldung: **14.08.1996**
(21) Anmeldenummer: 96100101.3
(22) Anmeldetag: 05.01.1996
(51) Int. Cl.: A47L 13/52

(54) **Putzgefäss**

(30) Priorität: 03.02.1995 DE 29501732 U; 25.08.1995 DE 29513773 U
(71) Anmelder: GIES GmbH & Co. Kunststoffwerk KG, D-36272 Niederaula (DE)
(72) Erfinder: Gies, Jakob, 36272 Niederaula (DE)
(74) Vertreter: Walther, Robert, Dipl.-Ing.

(57) **Zusammenfassung**

Putzgefäß, wie z. B. Putzeimer, wobei der Boden des Gefäßes mit vorstehenden Teilen (3) versehen ist.

## Beschreibung

Die Erfindung betrifft ein Putzgefäß, wie z.B. einen Putzeimer.

Beim Putzen von Räumen mit Hilfe einer Bürste tritt bekanntlich das Problem auf, daß sich die Bürste beim Putzen mit Schmutz zusetzt. Es ist demzufolge erforderlich, diese Bürste von Schmutzteilchen zu befreien, was üblicherweise von Hand geschieht oder mit Hilfe besonderer Geräte vor sich gehen kann.

Das wird erfindungsgemäß dadurch erreicht, daß der Boden des Gefäßes mit vorstehenden Teilen versehen ist. Im einzelnen ist die Ausbildung dabei so getroffen, daß die Teile aus einer Vielzahl von Noppen bestehen, die am Boden vorstehen.

Die Reinigung der Bürste kann nunmehr in einfacher Weise dadurch erfolgen, daß die Bürste über die Noppen hin und her bewegt wird, so daß sich die Schmutzteile durch die damit verbundene Verbiegung der einzelnen Borsten leicht aus der Bürste lösen und am Boden liegenbleiben. Zu diesem Zweck muß der Boden eine gewisse Längsausdehnung aufweisen.

Als ein weiteres Merkmal der Erfindung weist der Henkel eine Achse und das Putzgerät im Seitenwandbereich einen Steg auf, wobei die Achse durch eine Bohrung im Steg drehbar aufnehmbar ist.

Es hat sich nun herausgestellt, daß insbesondere bei Putzgefäßen mit einem sich quer zur Achse des Henkels erstreckenden länglichen Boden und bei nur geringer Füllhöhe, also beispielsweise bei einem Viertel der maximalen Füllhöhe an Wasser, das Putzgefäß sich während des Transportes durch die Wasserbewegung derart aufschaukelt, daß das Putzgefäß sich um die Achse des Henkels dreht und das Putzwasser sich auf den Boden ergießt. Das passiert nicht, wenn das Putzgefäß vollständig gefüllt ist, da dann der Abstand zwischen der Achse des Henkels und dem Schwerpunkt des Eimers geringer ist, als wenn das Putzgefäß nur zu einem Viertel gefüllt ist.

Um einem derartigen Kippen des Eimers auch bei nur geringer Füllhöhe des Putzgefäßes vorzubeugen, wird erfindungsgemäß vorgeschlagen, daß der Henkel in einer Stellung senkrecht zum Boden des Putzgefäßes am Putzgefäß arretierbar ist.

Im einzelnen ist hierbei vorgesehen, daß der Henkel im Bereich der Achse zur Aufnahme durch die Bohrung des Steges, einen Vorsprung aufweist, der in eine korrespondierend hierzu ausgebildete Aussparung im Steg eingreift. Die Achse weist weiterhin eine parallel zur Längsachse verlaufende Nase auf, die in senkrechter Position des Henkels in eine in der Bohrung angeordnete Nut einläuft. Weil der Durchmesser der Bohrung etwa dem Durchmesser der Achse zuzüglich der Hohe der Nase entspricht, und da die Nut in der Bohrung und die Aussparung im Steg in derselben Ebene liegen, kann der Henkel in senkrechter Position zum Boden, also im Prinzip in vertikaler Stellung, nach oben gezogen werden, mit der Folge, daß die Nase in die Nut einlaufen kann und gleichzeitig der Vorsprung am Henkel in die korrespondierend hierzu gebildete Aussparung im Steg eingreift. In diesem Fall ist somit der Henkel undrehbar mit dem Putzgefäß verbunden. Mithin besteht auch keine Gefahr mehr, daß selbst bei geringer Füllhöhe das Putzgefäß um die Achse des Henkels kippen kann.

Nach einem weiteren Merkmal der Erfindung weist das Putzgefäß insbesondere vier Rollen auf, wobei die Rollen vorzugsweise steckbar mit dem Putzgefäß verbindbar sind.

In der Zeichnung ist eine beispielsweise Ausführungsform dargestellt.

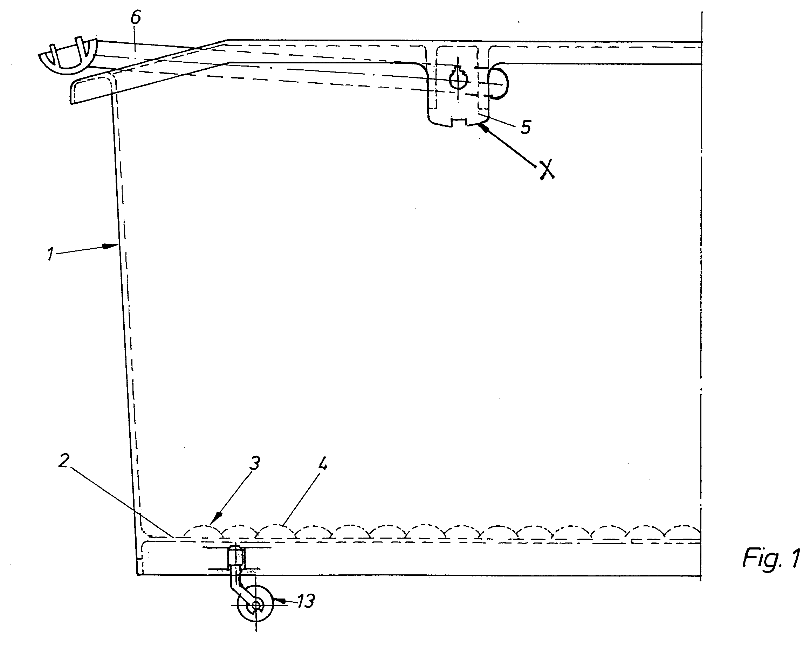

- Fig. 1: zeigt im Schnitt das erfindungsgemäße Putzgefäß;

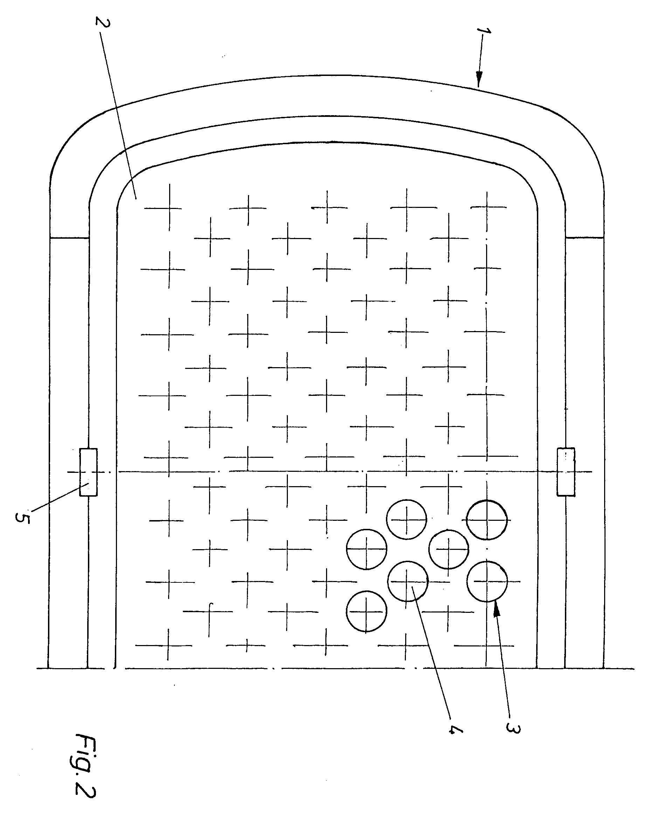

- Fig. 2: zeigt eine Aufsicht;
- Fig. 3: zeigt die Einzelheit x in vergößerter Darstellung ohne Henkel;
- Fig. 4: zeigt eine Seitenansicht gemäß Fig. 3;
- Fig. 5: zeigt den unteren Teil des mit der Achse in einer Ansicht von unten;
- Fig. 6: zeigt eine Seitenansicht von Fig. 5.

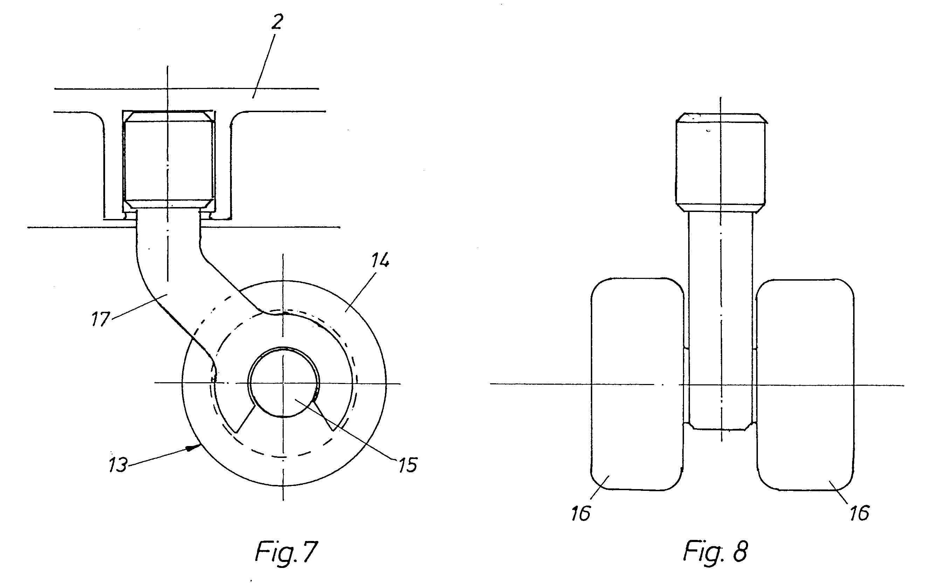

- Fig. 7: zeigt die Rolle in vergrößerter Darstellung;
- Fig. 8: zeigt eine weitere Ansicht gemäß Fig. 7.

Der insgesamt mit 1 bezeichnete Putzeimer besitzt den Boden 2. Am Boden sind vorstehende Teile 3 angebracht. Laut der beispielsweisen Ausführungsform sind diese Teile Noppen 4, die aus dem Boden herausgearbeitet sind.

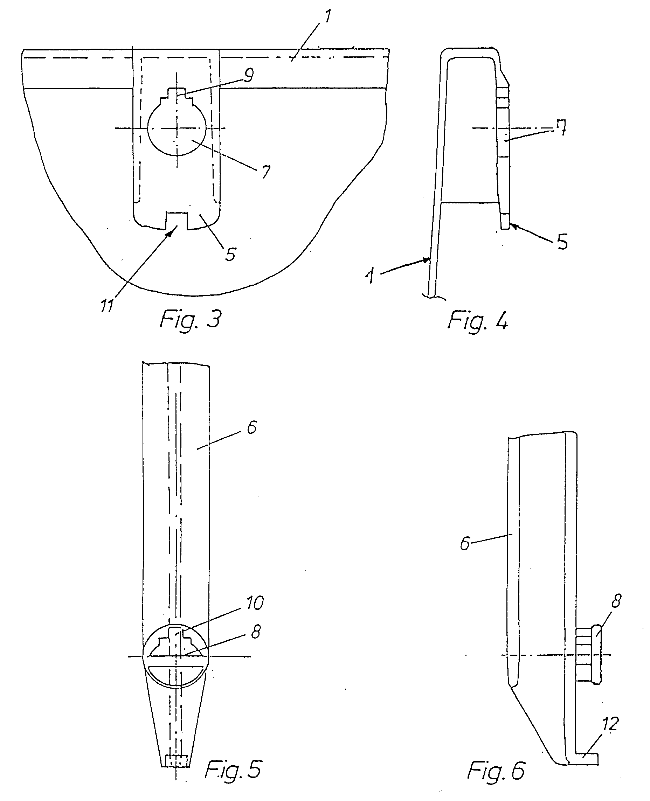

Gemäß Fig. 3 besitzt der mit 1 bezeichnete Putzeimer den Steg 5 zur Aufnahme des Henkels 6. Der Steg 5, der im Seitenwandbereich des Putzgefäßes angeordnet ist, weist die Bohrung 7 zur Aufnahme der Achse 8 des Henkels 6 auf. Die Bohrung 7 ist hierbei mit einer Nut 9 versehen, in die die korrespondierend hierzu ausgebildete Nase 10 der Achse 8 des Henkels 6 eingreifen kann. Darüberhinaus weist der Steg 5 die Aussparung 11 und der Henkel 6 den Vorsprung 12 auf. In senkrechter Position greift nunmehr der Vorsprung 12 in die Aussparung 11 ein. Gleichzeitig kann die Nase 10 in die Nut 9 einlaufen, da sich sowohl die Aussparung 11 als auch die Nut 9 in der gleichen Ebene befinden. Da der Durchmesser der Bohrung 7 etwa dem Durchmesser der Achse 8 zuzüglich der Höhe der Nase 10 entspricht, ist die Achse 8 durch die Bohrung 7 drehbar aufnehmbar.

Weiterhin ist vorgesehen, daß das Putzgefäß an allen vier Ecken Rollen 13 aufweist. Die mit 13 bezeichnete Rolle besteht aus einem Rollenkörper 14 mit zwei auf einer Achse 15 angeordneten Rollen 16. Die Achse 15 wird zwischen den beiden Rollen 16 durch einen Arm 17 klemmend erfaßt, wobei der Arm am anderen Ende steckbar mit dem Boden 2 des Putzeimers 1 verbindbar ist.

## Patentansprüche

1. Putzgefäß, wie z. B. Putzeimer,
**dadurch gekennzeichnet**, daß
der Boden des Gefäßes mit vorstehenden Teilen (3) versehen ist.

2. Putzgefäß nach Anspruch 1,
**dadurch gekennzeichnet**, daß
die Teile aus einer Vielzahl von Noppen (4) bestehen.

3. Putzgefäß nach Anspruch 2,
**dadurch gekennzeichnet**, daß
die Noppen (4) aus dem Boden des Gefäßes herausgearbeitet sind.

4. Putzgefäß nach Anspruch 1,
**dadurch gekennzeichnet**, daß
der Henkel (6) eine Achse (8) und das Gefäß (1) im Seitenwandbereich einen Steg (5) aufweisen, wobei die Achse (8) durch eine Bohrung (7) im Steg (5) drehbar aufnehmbar ist.

5. Putzgefäß nach einem oder mehreren der voranstehenden Anspüche,
**dadurch gekennzeichnet**, daß
der Henkel (6) in einer Stellung senkrecht zum Boden (2) des Putzgefäßes (1) am Putzgefäß (1) arretierbar ist.

6. Putzgefäß nach einem oder mehreren der voranstehenden Anspüche,
**dadurch gekennzeichnet**, daß
der Henkel (6) im Bereich der Achse (8) zur Aufnahme durch die Bohrung (7) des Steges (5) einen Vorsprung (12) aufweist, der in eine korresponierend hierzu ausgebildete Aussparung (11) im Steg (5) eingreift.

7. Putzgefäß nach einem oder mehreren der voranstehenden Anspüche,
**dadurch gekennzeichnet**, daß
die Achse (8) eine parallel zur Längsachse verlaufende Nase (10) aufweist, die in senkrechter Position des Henkels (6) in einer in der Bohrung (7) angeordneten Nut (9) einläuft.

8. Putzgefäß nach einem oder mehreren der voranstehenden Anspüche,
**dadurch gekennzeichnet**, daß
der Durchmesser der Bohrung (7) dem Durchmesser der Achse (8) zzgl. der Höhe der Nase (10) entspricht.

9. Putzgefäß nach einem oder mehreren der voranstehenden Anspüche,
**dadurch gekennzeichnet**, daß
die Nut (9) in der Bohrung (7) und die Aussparung (11) im Steg (5) in derselben Ebene liegen.

10. Putzgefäß nach Anspruch 1,
**dadurch gekennzeichnet**, daß
das Putzgefäß vier Rollen (13) aufweist.

11. Putzgefäß nach Anspruch 10,
**dadurch gekennzeichnet**, daß
die Rollen (13) steckbar mit dem Putzgefäß (19) verbindbar sind.
